# EUROPÄISCHE PATENTSCHRIFT

(11) **EP 0 886 289 B1**
(45) Veröffentlichungstag und Bekanntmachung des Hinweises auf die Patenterteilung: **07.04.2004**
(21) Anmeldenummer: 98109626.6
(22) Anmeldetag: 27.05.1998
(51) Int. Cl.: H01H 1/00, B60Q 1/14

(54) **Elektrischer Dreh-/Schubschalter**
Electric rotative push switch
Commutateur électrique rotatif à poussoir

(30) Priorität: 04.06.1997 DE 19723482
(43) Veröffentlichungstag der Anmeldung: 23.12.1998
(73) Patentinhaber: Leopold Kostal GmbH & Co. KG, 58507 Lüdenscheid (DE)
(72) Erfinder: Bellach, Wolfgang, 44801 Bochum (DE); Eikenberg, Thomas, 44869 Bochum (DE); Hoffmann, Ernst-Wilhelm, 58849 Herscheid (DE)

(56) Entgegenhaltungen:
- DE-C- 3 740 022
- DE-C- 3 802 144
- US-A- 5 047 600
- US-A- 5 075 519
- US-A- 5 272 290

## Beschreibung

Die vorliegende Erfindung geht von einem gemäß dem Oberbegriff des Hauptanspruches konzipierten elektrischen Dreh-/Schubschalter aus.

Derartige elektrische Dreh-/Schubschalter sind dafür vorgesehen, einen bzw. mehrere elektrische(n) Stromkreis(e) durch Beeinflussung der im Gehäuse ortsfest und bewegbar angeordneten elektrischen Kontaktteile zu unterbrechen bzw. zu schließen. So ist es dem Benutzer möglich, über das Betätigungsglied durch Ein-, Aus- und Umschalten der angeschlossenen elektrischen Stromkreise eine Vielzahl von Funktionen auf komfortable Art und Weise ein- bzw. auszuschalten. Oftmals werden über solche elektrischen Dreh-/Schubschalter die verschiedenen Funktionen der Beleuchtungsanlage, Wischeranlage usw. eines Kraftfahrzeuges beeinflußt.

Durch die DE 38 02 144 C1 ist ein dem Oberbegriff des Hauptanspruches entsprechender elektrischer Dreh-/Schubschalter bekanntgeworden. Dieser elektrische Dreh-/Schubschalter weist ein die elektrischen Kontaktteile aufnehmendes Gehäuse auf, an welchem ein in mehrere Schaltpositionen bringbares Betätigungsglied gelagert ist. Das Betätigungsglied kann sowohl parallel zur Gehäuselängsachse durch Zug- bzw. Schubbewegungen, als auch durch Verdrehen um die Gehäuselängsachse in mehrere Schaltpositionen gebracht werden. Dem Betätigungsglied sind mechanische Funktionselemente derart zugeordnet, so daß die bewegbaren elektrischen Kontaktteile bei einer jeden Betätigung des Betätigungsgliedes durch eine translatorische Schiebebewegung verstellt werden. Die bewegbaren elektrischen Kontaktteile dieses Dreh-/Schubschalters sind jedoch teilweise unterschiedlich ausgebildet und werden durch das Verstellen des Betätigungsgliedes zum einen Teil radial und zum anderen Teil parallel zur Gehäuselängsachse verschoben, dies führt jedoch zu einer entsprechend großen radialen Abmessung des elektrischen Schalters. Zur Realisierung der verschiedenen Schaltfunktionen sind die bewegbaren elektrischen Kontaktteile zwischen zwei Leiterplatinen angeordnet, welche die im Gehäuse ortsfest gehaltenen elektrischen Kontaktteile umfassen.

Der vorliegenden Erfindung liegt deshalb die Aufgabe zugrunde, einen über ein einziges Betätigungsglied zu bedienenden elektrischen Dreh-/Schubschalter der eingangs erwähnten Art so weiterzubilden, daß bei hoher Funktionsdichte und besonders kompaktem Aufbau, alle bewegbaren elektrischen Kontaktteile im wesentlichen identisch ausgebildet und zur Realisierung der verschiedenen Schaltfunktionen lediglich parallel zur Gehäuselängsachse verschiebbar gehalten sind.

Erfindungsgemäß wird die Aufgabe durch die im kennzeichnenden Teil des Hauptanspruches angegebenen Merkmale gelöst.

Vorteilhaft bei einer derartigen Ausgestaltung ist, daß ein solcher elektrischer Dreh-/Schubschalter selbst bei hoher Funktionsdichte insgesamt eine sehr schlanke, griffgünstige Kontur aufweist und alle ortsfest am Gehäuse angeordneten elektrischen Kontaktteile zu einer einzigen Leiterplatine zusammenfaßbar sind und sich der Schalter damit auf besonders kostengünstige Art und Weise herstellen läßt.

Weitere vorteilhafte Ausgestaltungen eines solchen elektrischen Dreh-/Schubschalters sind in den Unteransprüchen angegeben.

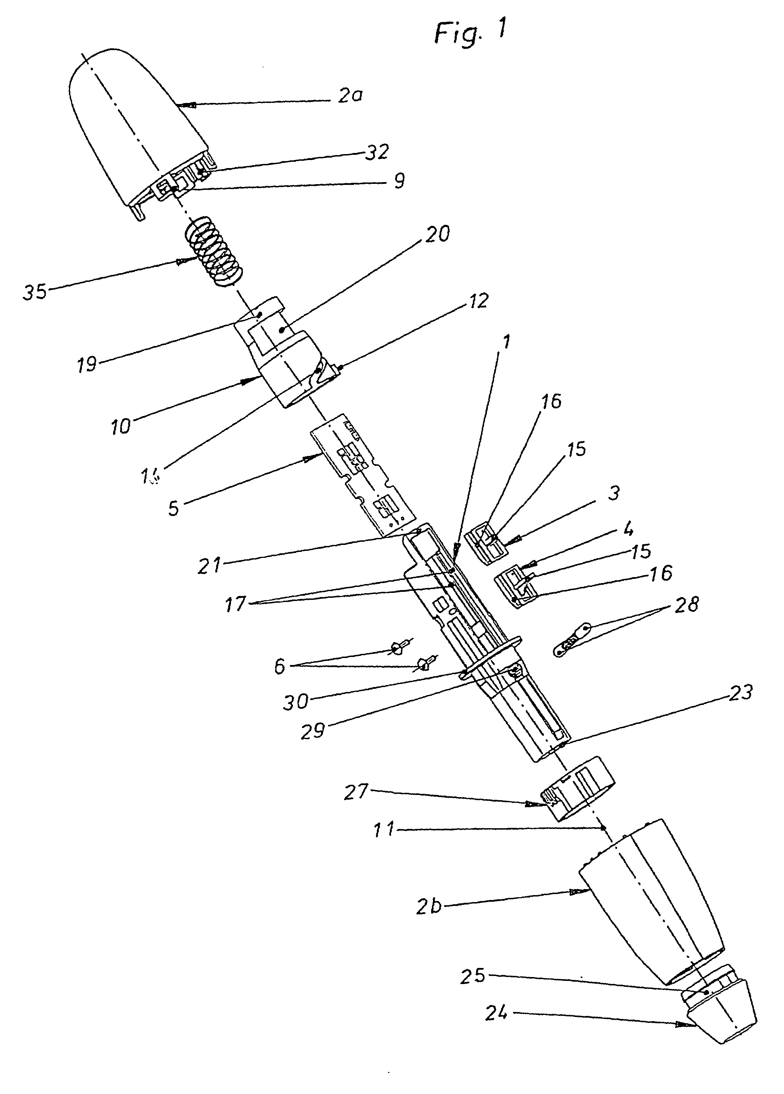

Anhand eines in den Zeichnungen dargestellten Ausführungsbeispieles sei der erfindungsgemäße Gegenstand näher erläutert und zwar zeigen
- Fig. 1: prinziphaft eine Explosionsdarstellung eines elektrischen Dreh-/Schubschalters

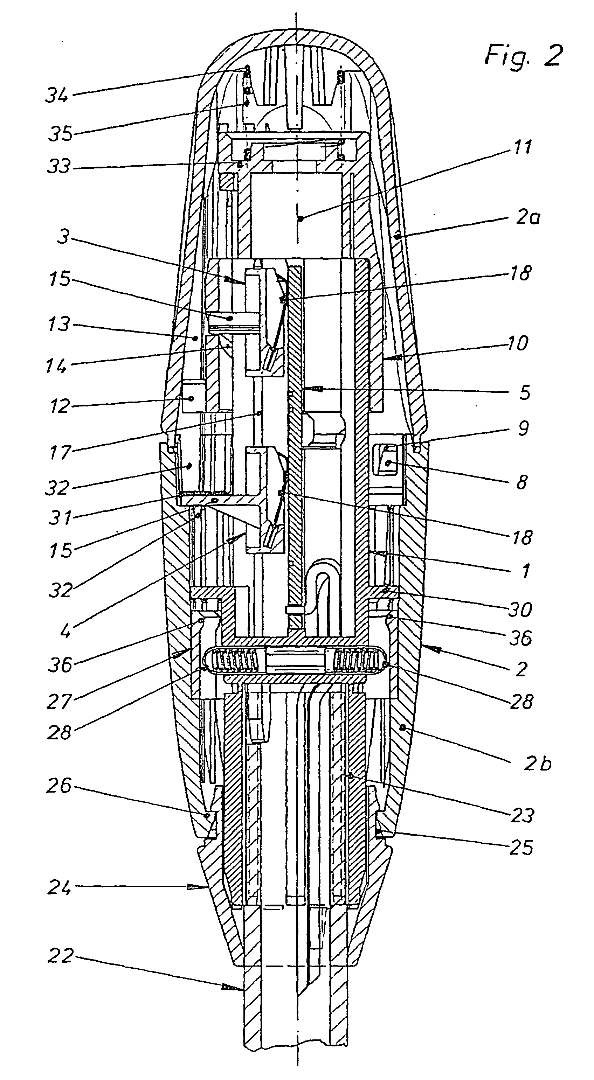

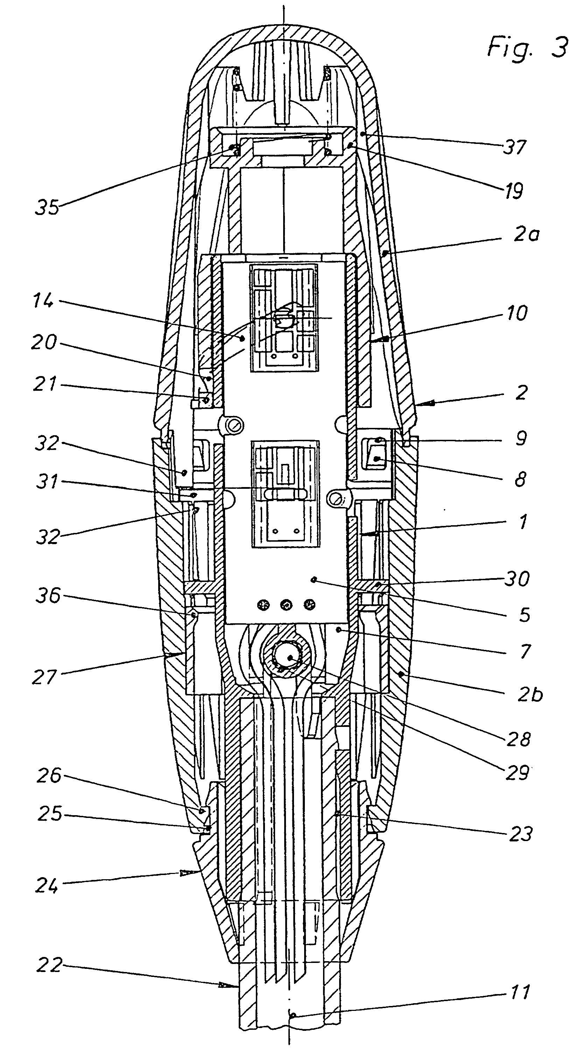

- Fig. 2: einen Längsschnitt eines elektrischen Dreh-/Schubschalters gemäß Fig. 1
- Fig. 3: einen gegenüber der Darstellung gemäß Fig. 2 um 90° verdreht angeordneten Längsschnitt eines elektrischen Dreh-/Schubschalters.

Wie aus den Figuren hervorgeht, besteht ein solcher elektrischer Dreh-/Schubschalter im wesentlichen aus einem Gehäuse, einem am Aufnahmekörper 1 des Gehäuses gelagerten, drehbar und verschiebbar in mehrere Schaltpositionen bringbaren Betätigungsglied 2, sowie den beiden zur Realisierung der verschiedenen Schaltfunktionen notwendigen, am Aufnahmekörper 1 verschieblich angeordneten, bewegbaren elektrischen Kontaktteilen 3,4, sowie den ortsfest am Aufnahmekörper 1 des Gehäuses gehaltenen elektrischen Kontaktteilen.

Wie weiterhin aus den Figuren hervorgeht, sind die ortsfest angeordneten elektrischen Kontaktteile zu einer einzigen Leiterplatine 5 zusammengefaßt. Über Niete 6 ist die Leiterplatine 5 unverrückbar in einer Aufnahmetasche 7 des Aufnahmekörpers 1 festgelegt. Das Betätigungsglied 2 ist in zwei Hälften 2a,2b aufgeteilt, die im zusammengefügten Zustand über angeformte Rasthaken 8 und Rastlaschen 9 fest miteinander verbunden sind. Die zweiteilige Ausführung des in seinem Innenraum alle Funktionskomponenten aufnehmenden, als diese ummantelndes Griffstück ausgebildeten Betätigungsgliedes 2, ermöglicht eine besonders einfache, kostensparende Montage des elektrischen Dreh-/Schubschalters. Durch seine Ausbildung als ummantelndes Griffstück kommt dem Betätigungsglied 2 zusätzlich auch eine gewisse Gehäusefunktion zu.

Auf dem freien Endbereich des Aufnahmekörpers 1 ist ein topfförmig ausgebildetes Funktionselement 10 drehbar gelagert. Die den Umfang bildenden Hauptflächen des topfförmigen Funktionselementes 10 erstrecken sich parallel zur Gehäuselängsachse 11. An die der ersten Hälfte 2a des Betätigungsgliedes 2 zugewandte Hauptfläche des Funktionselementes 10 ist eine sich parallel zur Gehäuselängsachse 11 erstreckende, mehrere Zähne aufweisende Verzahnung 12 angeformt. Über die Verzahnung 12 steht das Funktionselement 10 formschlüssig bzw. drehfest mit einer entsprechenden Gegenverzahnung 13 der ersten Hälfte 2a des Betätigungsgliedes 2 in Eingriff. Das Funktionselement 10 wird also durch direkte Kopplung bei einer Drehverstellung des Betätigungsgliedes 2 in seine verschiedenen Schaltpositionen mitverstellt. Von Schubverstellungen des Betätigungsgliedes 2 bleibt das Funktionselement 10 jedoch unbeeinflußt, weil die Verzahnung 12 parallel zur Gehäuselängsachse 11 verschieblich gleitend in der Gegenverzahnung 13 gehalten ist. In die mantelförmigen Hauptflächen des Funktionselementes 10 ist eine Steuerbahn 14 eingeformt. Die Steuerbahn 14 ist als ein die Hauptflächenwandung durchbrechender Schlitz ausgebildet und zur Betätigung eines parallel zur Gehäuselängsachse 11 verschiebbar am Aufnahmekörper 1 gehaltenen, bewegbaren ersten Kontaktteiles 3 vorgesehen. Um dies zu ermöglichen, weist das bewegbare erste Kontaktteil 3 einen als Gleitschlitten ausgebildeten, ein elektrisches Kontaktelement 18 ortsfest an seiner einen Hauptfläche aufnehmenden Träger auf. An die andere Hauptfläche des Gleitschlittens ist einstückig ein mit der Steuerbahn 14 zusammenwirkender Steuerzapfen 15 angeformt. Außerdem ist der Gleitschlitten an seinen beiden Seitenflächen jeweils mit einer Führungsnut 16 versehen, welche jeweils in eine entsprechend ausgebildete, einstückig am Aufnahmekörper 1 vorhandene Führungsschiene 17 eingreifen. Die Steuerbahn 14 wandelt also in Wirkverbindung mit dem Steuerzapfen 15 durch ihren schraubenförmig ausgebildeten ersten Steuerbahnabschnitt auf einfache Art und Weise die Drehbewegungen des Betätigungsgliedes 2 in translatorische Schiebebewegungen für das bewegbare erste Kontaktteil 3 um. Zur Einführung des Steuerzapfens 15 in die Steuerbahn 14 weist diese einen kurzen, parallel zur Gehäuselängsachse 11 verlaufenden zweiten Steuerbahnabschnitt auf.

Die Lagerung der ersten Hälfte 2a des Betätigungsgliedes 2 erfolgt durch mehrere an die Innenwandung angeformte, parallel zur Gehäuselängsachse 11 verlaufende Lagerstege 37, die gleitend an einem Lagerring 19 des Aufnahmekörpers 1 zur Anlage kommen. Durch einen mit Spiel in ein Anschlagfenster 20 des Funktionselementes 10 hineinragenden Anschlagbügel 21 des Aufnahmekörpers 1 erfährt das Funktionselement 10 bzw. das Betätigungsglied 2 eine Begrenzung seines Verstellwinkels.

Der den Aufnahmekörper 1 ortsfest haltende Gehäusegrundkörper ist als rohrförmiger Hebelabschnitt 22 ausgebildet. Der Aufnahmekörper 1 wird zur ortsfesten Verbindung einfach mit seiner eingeformten Befestigungshülse 23 dreh- und schubverstellgesichert auf dem freien Endbereich des Hebelabschnittes 22 rastend aufgesteckt. Der funktionell zum Gehäuse gehörige Aufnahmekörper 1 ist im wesentlichen zapfenartig ausgebildet und nimmt - wie bereits beschrieben - das Betätigungsglied 2 dreh- und schubverstellbar gelagert auf. Zu diesem Zweck ist die zweite Hälfte 2b des Betätigungsgliedes 2 - zusätzlich zu den bereits beschriebenen, die Lagerung der ersten Hälfte 2a betreffenden Maßnahmen - mit ihrer der ersten Hälfte 2a abgewandten Unterseite drehbeweglich auf einem verschieblich auf dem rohrförmigen Hebelabschnitt 22 und der Außenwandung des Aufnahmekörpers 1 angeordneten Schiebestück 24 gelagert. Das Schiebestück 24 weist zu diesem Zweck eine Führungsnut 25 auf, in die an die Unterseite der zweiten Hälfte 2b des Betätigungsgliedes 2 angeformte Gleitansätze 26 eingreifen. Außerdem ist auf der Außenwandung des Aufnahmekörpers 1 ein Rastkurvenring 27 parallel zur Gehäuselängsachse 11 verschieblich gelagert, der jedoch über entsprechende Haltemittel drehfest und unverschieblich mit der Innenwandung der zweiten Hälfte 2b des Betätigungsgliedes 2 in Verbindung steht. Somit wird das Schiebestück 24 nur bei einer Schubverstellung des Betätigungsgliedes 2 in seine verschiedenen Schaltpositionen mitverstellt, der Rastkurvenring 27 wird jedoch sowohl bei einer Dreh- als auch Schubverstellung des Betätigungsgliedes 2 in seine verschiedenen Schaltpositionen zwangsweise mitgenommen. Zur rastenden Sicherstellung von vier verschiedenen, durch eine Drehverstellung des Betätigungsgliedes 2 zu erreichende Schaltpositionen sind in die Innenwandung des Rastkurvenringes 27 zwei um 180° versetzt zueinander angeordnete Rastkurven eingeformt. In jede der beiden Rastkurven greift zur Sicherstellung der verschiedenen Schaltpositionen ein druckfederbelastetes Rastelement 28 ein. Zur verschieblichen Aufnahme sind die beiden druckfederbelasteten Rastelemente 28 in einem quer zur Gehäuselängsachse 11 verlaufenden Aufnahmetunnel 29 des Aufnahmekörpers 1 untergebracht. Zusammen mit einem an den Aufnahmekörper 1 angeformten Lageransatz 30 und dem am Hebelabschnitt 22 gehaltenen Schiebestück 24 tragen die Lagerstege 37 der ersten Hälfte 2a im Zusammenspiel mit dem Lagerring 19 des Aufnahmekörpers 1 zu einer positionsgenauen sicheren Lagerung des Betätigungsgliedes 2 bei.

Dadurch, daß der Rastkurvenring 27 auswechselbar an der Innenwandung der zweiten Hälfte 2b des Betätigungsgliedes 2 angeordnet ist, lassen sich auf einfache Art und Weise Verstellwinkel, Anzahl der Schaltpositionen, sowie rastend und tastend zu erreichenden Schaltpositionen für unterschiedliche Dreh-/Schubschaltervarianten auf einfache Art und Weise realisieren.

Über die beiden Führungsschienen 17 ist außerdem ein bewegbares elektrisches zweites Kontaktteil 4 parallel zur Gehäuselängsachse 11 verschieblich am Aufnahmekörper 1 gehalten. Das zweite Kontaktteil 4 entspricht in seiner Ausbildung im Prinzip dem ersten Kontaktteil 3. Lediglich der angeformte Steuerzapfen 15 weist nicht einen runden, sondern einen flachen, rechteckförmigen Querschnitt auf. Dies ist nur deshalb der Fall, weil das zweite Kontaktelement 4 zu seiner Betätigung in eine weitere Steuerbahn 31 eingreift, die aus einer Vielzahl parallel zu Gehäuselängsachse 11 eng beabstandet zueinander verlaufenden Stegen 32 gebildet ist. Die Stege 32 sind nutartig auf gleicher Höhe unterbrochen, wodurch die konzentrisch zur Gehäuselängsachse 11 verlaufende weitere Steuerbahn 31 entsteht. Die Stege 32 sind zu einem Teil an die Innenwandung der ersten Hälfte 2a und zu einem anderen Teil an die Innenwandung der zweiten Hälfte 2b des Betätigungsgliedes 2 angeformt. Die weitere Steuerbahn 31 liegt etwa auf Höhe der Trennstelle der beiden Hälften 2a,2b des Betätigungsgliedes 2. Das bewegbare zweite Kontaktteil 4 wird also durch direkte Kopplung bei Schubverstellungen des Betätigungsgliedes 2 mitverstellt, bleibt jedoch wegen des konzentrischen Verlaufes der weiteren Steuerbahn 31 durch Drehverstellungen des Betätigungsgliedes 2 unbeeinflußt. Das Betätigungsglied 2 wird tastend in seine über die Schubverstellungen zu erreichenden drei Schaltpositionen gebracht. Zur Rückstellung des Betätigungsgliedes 2 in seine Grundschaltposition ist zwischen der quer zur Gehäuselängsachse 11 verlaufenden Abstützfläche 33 des Funktionselementes 10 und der ebenfalls quer zur Gehäuselängsachse 11 verlaufenden Innenfläche 34 des Betätigungsgliedes 2 eine unter Vorspannung stehende Schraubendruckfeder 35 angeordnet Um ausgehend von der Grundschaltposition durch eine Schubverstellung des Betätigungsgliedes 2 über die erste Funktionsschaltposition mittels eines deutlich spürbaren Widerstandes (Druckpunkt) in die zweite Funktionsschaltposition zu gelangen, weisen die beiden Rastkurven des Rastringes 27 jeweils eine mit den Rastelementen 28 zusammenwirkende Auflauframpe 36 auf.

Wie bereits vorstehend beschrieben, sind die Kontaktteile zu einer einzigen Leiterplatine 5 zusammengefaßt. Dabei liegt die Leiterplatine 5 - wie ebenfalls weiter vorstehend bereits beschrieben - unverrückbar in einer Aufnahmetasche 7 des Aufnahmekörpers 1 fest. Die eine der beiden Hauptfläche der Leiterplatine 5 kommt dabei am Aufnahmekörper 1 zur Anlage und die andere der beiden Hauptflächen der Leiterplatine 5 ist in beiden bewegbaren Kontaktteilen 3,4 zugeordnet. Die bewegbaren Kontaktteile 3,4 durchgreifen mit ihren Kontaktelementen 18 ein im Aufnahmekörper 1 vorhandenes Kontaktfenster und kommen zur Realisierung der verschiedenen Schaltfunktionen jeweils mit ihren Kontaktelementen 18 an die Leiterbahnstruktur der Leiterplatine 5 zur Anlage. Zur exakten und positionsgenauen Verstellung sind die beiden bewegbaren Kontaktteile 3,4 über ihre Führungsnuten 16 jeweils zwischen den beiden längs des Kontaktfensters angeordneten Führungsschienen 17 am Aufnahmekörper 1 parallel zur Gehäuselängsachse 11 verschieblich gehalten. Um eine besonders schlanke, griffgünstige Außenkontur des Betätigungsgliedes 2 realisieren zu können, erstreckt sich die Leiterplatine 5 mit ihren Hauptflächen parallel zur Gehäuselängsachse 11. Aus dem gleichen Grunde ist auch die Verstellung der beiden bewegbaren Kontaktteile 3,4 lediglich parallel zum Verlauf der Gehäuselängsachse 11 möglich, weil so möglichst wenig Bauraum zu beansprucht wird.

Das Betätigungsglied 2 kann also auf einfache Art und Weise komfortabel bedient werden, wobei dem Benutzer durch die deutlich spürbare Rastung bzw. den deutlich spürbaren Druckpunkt eindeutig zu erkennen gegeben wird, daß das verstellte Betätigungsglied 2 eine definierte Schaltposition eingenommen hat. Der Dreh-/Schubschalter ist als Funktionskomponente an den freien Endbereich des Betätigungshebels eines Lenksäulenmodules angebracht, wobei das Lenksäulenmodul eine übergeordnete Bedien-/Funktionseinheit eines Kraftfahrzeuges darstellt.

## Patentansprüche

1. Elektrischer Dreh-/Schubschalter mit einem die elektrischen Kontaktteil (3, 4) aufnehmenden Gehäuse, an welchem ein um die Gehäuselängsachse (11) drehbar und parallel zur Gehäuselängsachse gegen Federkraft verschiebbar in mehrere Schaltpositionen bringbares Betätigungsglied (2) gelagert ist, wobei das Betätigungsglied (2) mit mechanischen Funktionselementen (10) in Verbindung steht, die derart ausgebildet und funktional den bewegbaren elektrischen Kontaktteilen (3, 4) so zugeordnet sind, daß die zur Verstellung vorgenommenen Dreh- und Schubbewegungen des Betätigungsgliedes (2) jeweils lediglich in translatorische Schiebebewegungen für die bewegbaren elektrischen Kontaktteile (3, 4) umgeformt werden, **dadurch gekennzeichnet, daß** auf dem Gehäuse ein sich mit seinen Hauptflächen parallel zur Gehäuselängsachse (11) erstreckendes Funktionselement (10) drehbar gelagert ist, welches über eine sich parallel zur Gehäuselängsachse (11) erstreckende Verzahnung (12) mit einer am Betätigungsglied (2) vorhandenen Gegenverzahnung (13) in Eingriff steht, so daß das Funktionselement (10) durch direkte Kopplung bei Drehbewegungen des Betätigungsgliedes (2) zwangsweise mitverstellt wird, jedoch bei Schubbewegungen des Betätigungsgliedes (2) unbeeinflußt bleibt und daß in den Hauptflächen des Funktionselementes (10) wenigstens eine Steuerbahn (14) vorhanden ist, die zumindest einen schraubenförmig ausgebildeten ersten Steuerbahnabschnitt aufweist und in die ein Steuerzapfen (15) eingreift, der mit einem parallel zur Gehäuselängsachse (11) verschiebbar am Gehäuse gehaltenen und damit durch das Funktionselement (10) verstellbaren ersten Kontaktteil (3) in Verbindung steht und daß am Betätigungsglied (2) zumindest eine konzentrisch um die Gehäuselängsachse (11) verlaufende weitere Steuerbahn (31) vorhanden ist, in die ebenfalls ein Steuerzapfen (15) eingreift, der mit einem parallel zur Gehäuselängsachse (11) verschiebbar am Gehäuse gehaltenen zweiten Kontaktteil (4) in Verbindung steht, so daß das zweite Kontaktteil (4) durch direkte Kopplung bei Schubbewegungen des Betätigungsgliedes (2) zwangsweise mitverstellt wird und bei Drehbewegungen des Betätigungsgliedes (2) unbeeinflußt bleibt.

2. Elektrischer Dreh-/Schubschalter nach Anspruch 1, **dadurch gekennzeichnet, daß** das Funktionselement (10) topfförmig ausgebildet und daß die Verzahnung (12) an die dem Betätigungsglied (2) zugewandte Hauptfläche angeformt ist.

3. Elektrischer Dreh-/Schubschalter nach Anspruch 1 oder 2, **dadurch gekennzeichnet, daß** die Steuerbahn (14) in Art einer Nut in die dem Betätigungsglied (2) abgewandte Hauptfläche des Funktionselementes (10) eingeformt ist.

4. Elektrischer Dreh-/Schubschalter nach Anspruch 1 oder 2, **dadurch gekennzeichnet, daß** die Steuerbahn (14) in Art eines Schlitzes die Hauptflächenwandung durchbrechend im Funktionselement (10) vorhanden ist.

5. Elektrischer Dreh-/Schubschalter nach einem der Ansprüche 1 bis 4, **dadurch gekennzeichnet, daß** die Steuerbahn (14) zumindest einen schraubenförmig ausgebildeten ersten Steuerbahnabschnitt und zumindest einen parallel zur Gehäuselängsachse (11) verlaufenden zweiten Steuerbahnabschnitt aufweist.

6. Elektrischer Dreh-/Schubschalter nach einem der Ansprüche 1 bis 5, **dadurch gekennzeichnet, daß** die weitere Steuerbahn (31) durch zwei an die Innenwandung des Betätigungsgliedes (2) angeformte, mit Abstand parallel zueinander konzentrisch zur Gehäuselängsachse (11) verlaufende Schultern gebildet ist.

7. Elektrischer Dreh-/Schubschalter nach einem der Ansprüche 1 bis 5, **dadurch gekennzeichnet, daß** an die Innenwandung des Betätigungsgliedes (2) eine Vielzahl, parallel zur Gehäuselängsachse eng beabstandet zueinander verlaufende Stege (32) angeformt sind, die durch eine nutartige Unterbrechung auf gleicher Höhe die konzentrisch zur Gehäuselängsachse (11) verlaufende weitere Steuerbahn (31) bilden.

8. Elektrischer Dreh-/Schubschalter nach einem der Ansprüche 1 bis 7, **dadurch gekennzeichnet, daß** zumindest eines der elektrischen bewegbaren Kontaktteile (3,4) aus einem als Gleitschlitten ausgebildeten Träger und zumindest einem zumindest einen Kontaktarm aufweisenden, ortsfest am Gleitschlitten gehaltenen Kontaktelement (18) besteht.

9. Elektrischer Dreh-/Schubschalter nach Anspruch 8, **dadurch gekennzeichnet, daß** der Träger einstückig mit einem Steuerzapfen (15) versehen ist und daß das Kontaktelement (18) an der dem Steuerzapfen (15) gegenüberliegenden Hauptfläche des Trägers festgelegt ist.

10. Elektrischer Dreh-/Schubschalter nach Anspruch 8 oder 9, **dadurch gekennzeichnet, daß** in die beiden Seitenflächen des Trägers bzw. Gleitschlittens jeweils eine parallel zur Gehäuselängsachse (11) durchgehend verlaufende Führungsnut (16) eingeformt ist.

11. Elektrischer Dreh-/Schubschalter nach einem der Ansprüche 8 bis 10, **dadurch gekennzeichnet, daß** das Kontaktelement (18) einstückig zumindest zwei Kontaktarme und jeder Kontaktarm einstückig mehrere Kontaktfinger aufweist.

12. Elektrischer Dreh-/Schubschalter nach einem der Ansprüche 1 bis 11, **dadurch gekennzeichnet, daß** der Dreh-/Schubschalter als Funktionskomponente einer weitere elektrische Schaltkomponenten aufweisenden Bedieneinheit ausgebildet ist.

13. Elektrischer Dreh-/Schubschalter nach Anspruch 12, **dadurch gekennzeichnet, daß** die Bedieneinheit als Lenkstockschalter eines Kraftfahrzeuges ausgebildet und daß der Dreh-/Schubschalter am freien Endbereich des Betätigungshebels des Lenkstockschalters angeordnet ist.

14. Elektrischer Dreh-/Schubschalter nach einem der Ansprüche 1 bis 13, **dadurch gekennzeichnet, daß** die ortsfest im Gehäuse gehaltenen elektrischen Kontaktteile zu einer einzigen Leiterplatine (5) zusammengefaßt sind.

15. Elektrischer Dreh-/Schubschalter nach einem der Ansprüche 1 bis 14, **dadurch gekennzeichnet, daß** ortsfest am Gehäuse ein funktional zum Gehäuse gehöriger Aufnahmekörper (1) angebracht ist, der das Betätigungsglied (2) dreh- und schubbeweglich aufnimmt und an dem Halteelemente zur ortsfesten Aufnahme der Leiterplatine (5) bzw. der ortsfest angeordneten Kontaktteile vorhanden sind, so daß die Leiterplatine (5) mit einer ihren beiden parallel zur Gehäuselängsachse (11) angeordneten Hauptfläche am Aufnahmekörper (1) anliegt und mit ihrer anderen Hauptfläche den bewegbaren elektrischen Kontaktteilen (3,4) zugeordnet ist.

16. Elektrischer Dreh-/Schubschalter nach einem der Ansprüche 1 bis 15, **dadurch gekennzeichnet, daß** an das Gehäuse bzw. an den Aufnahmekörper (1) zwei Führungsschienen (17) angeformt sind, die parallel zur Gehäuselängsachse (11) ausgerichtet sind und welche die beiden bewegbaren Kontaktteile (3,4) verschieblich zwischen sich aufnehmen.

17. Elektrischer Dreh-/Schubschalter nach einem der Ansprüche 1 bis 16, **dadurch gekennzeichnet, daß** am Gehäuse bzw. am Aufnahmekörper (1) eine federelastisch auslenkbare Rasteinrichtung gehalten ist, die mit ihren beiden Rastelementen (28) jeweils in eine um 180° versetzt am Betätigungsglied (2) angebrachte Rastkurve eingreift.

18. Elektrischer Dreh-/Schubschalter nach einem der Ansprüche 1 bis 17, **dadurch gekennzeichnet, daß** das Betätigungsglied (2) in seinem Innenraum alle Funktionskomponenten aufnimmt und als diese ummantelndes Griffstück ausgebildet ist.

19. Elektrischer Dreh-/Schubschalter nach einem der Ansprüche 1 bis 18, **dadurch gekennzeichnet, daß** das Betätigungsglied (2) etwa in Höhe der weiteren Steuerbahn (31) quer zur Gehäuselängsachse (11) verlaufend zweigeteilt ist, und daß die beiden Hälften (2a,2b) des Betätigungsgliedes (2) über Rasthaken (8) und Rastlaschen (9) fest miteinander in Verbindung stehen.

20. Elektrischer Dreh-/Schubschalter nach einem der Ansprüche 1 bis 19, **dadurch gekennzeichnet, daß** zwischen der quer zur Gehäuselängsachse (11) verlaufenden Innenfläche (34) des Betätigungsgliedes (2) und der dieser zugewandten Abstützfläche (33) des Funktionselementes (10) eine, die zur Rückstellung des Betätigungsgliedes (2) notwendige Federkraft erzeugende Schraubendruckfeder (35) angeordnet ist.

## Claims

1. Electrical rotary / push switch with an enclosure which accommodates the electrical contact pieces (3,4) and on which an operating element (2) is supported which can be brought into several switch positions and which can be rotated around the enclosure longitudinal axis (11) and displaced against spring force parallel to the enclosure longitudinal axis, with the operating element (2) being linked to mechanical functional elements (10) which are designed and allocated functionally to the movable electrical contact pieces (3,4) in such a way that each of the rotary and pushing movements of the operating element (2) conducted for the purpose of adjustment is only converted into translatory pushing movements for the movable electrical contact pieces (3,4), **characterized by** the fact that a functional element (10) extending with its main surfaces parallel to the enclosure longitudinal axis (11) is rotatably supported on the enclosure and, by means of a gearing (12) extending parallel to the enclosure longitudinal axis (11), engages with a counter-gearing (13) on the operating element (2) so that, as a result of direct coupling, the functional element (10) is compulsorily co-adjusted by rotary movements of the operating element (2), but remains unaffected by pushing movements of the operating element (2) and that there is at least one control track (14) in the main surfaces of the functional element (2) which features at least one helically designed first control track section in which a control pin (15) engages which is linked to a first contact piece (3) held on the enclosure in a slidable manner parallel to the enclosure longitudinal axis (11) and consequently adjustable by the functional element (10), and that there is at least one further control track (31) running concentrically around the enclosure longitudinal axis (11) in which a control pin (15) likewise engages which is linked to a second contact piece (4) held in a slidable manner on the enclosure parallel to the enclosure longitudinal axis (11) so that the second contact piece (4) is compulsorily co-adjusted by pushing movements of the operating element (2) as a result of direct coupling and remains unaffected by rotary movements of the operating element (2).

2. Electrical rotary / push switch according to Claim 1, **characterised by** the fact that the functional element (10) is of a cup-like design and that the gearing (12) is moulded onto the main surface facing the operating element (2).

3. Electrical rotary / push switch according to Claim 1 or Claim 2, **characterised by** the fact that the control track (14) is integrated like a groove into the main surface of the functional element (10) facing away from the operating element (2).

4. Electrical rotary / push switch according to Claim 1 or Claim 2, **characterised by** the fact that the control track (14) is provided in the functional element (10) in a slot-like manner, breaching the wall of the main surface.

5. Electrical rotary / push switch according to any of Claims 1 to 4, **characterised by** the fact that the control track (14) features at least one helically designed first control track section and at least one second control track section running parallel to the enclosure longitudinal axis (11).

6. Electrical rotary / push switch according to any of Claims 1 to 5, **characterised by** the fact that the further control track (31) is formed by two shoulders moulded onto the inner wall of the operating element (2) and running spaced parallel to each other concentrically with the enclosure longitudinal axis (11).

7. Electrical rotary / push switch according to any of Claims 1 to 5, **characterised by** the fact that a plurality of ribs (32) running parallel to the longitudinal axis of the enclosure and spaced close to each other are moulded onto the inside wall of the operating element (2) forming the further control track (31) running concentrically with the enclosure longitudinal axis (11) as a result of a groove-like gap at the same level.

8. Electrical rotary / push switch according to any of Claims 1 to 7, **characterised by** the fact that at least one of the electrical movable contact pieces (3,4) comprises a carrier shaped as a sliding carriage and at least one contact element (18) held stationary on the sliding carriage and featuring at least one contact arm.

9. Electrical rotary / push switch according to Claim 8, **characterised by** the fact that the carrier is provided with an integral control pin (15) and that the contact element (18) is fixed on the main surface of the carrier opposite to the control pin (15).

10. Electrical rotary / push switch according to Claim 8 or Claim 9, **characterised by** the fact that a slideway groove (16) running uninterrupted parallel to the enclosure longitudinal axis (11) is moulded into each of the two side surfaces of the carrier or sliding carriage.

11. Electrical rotary / push switch according to any of Claims 8 to 10, **characterised by** the fact that the contact element (18) features at least two moulded-on contact arms and each contact arm features several moulded-on contact fingers.

12. Electrical rotary / push switch according to any of Claims 1 to 11, **characterised by** the fact that the rotary / push switch is executed as a functional component of a basic operator station featuring further electrical switching components.

13. Electrical rotary / push switch according to Claim 12, **characterised by** the fact that the basic operator station is executed as a steering column switch of a motor vehicle and that the rotary / push switch is arranged at the free end zone of the operating lever of the steering column switch.

14. Electrical rotary / push switch according to any of Claims 1 to 13, **characterised by** the fact that the electrical contact pieces held in a stationary manner on the enclosure are combined to a single printed circuit (5).

15. Electrical rotary / push switch according to any of Claims 1 to 14, **characterised by** the fact that a receptacle (1) is attached in a stationary manner to the enclosure which is functionally related to the enclosure and which holds the operating element (2) in a manner which can be moved by rotation and by pushing and on which there are retention elements for the purpose of receiving the printed circuit (5) in a stationary manner, or the contact pieces arranged in a stationary manner respectively, so that the printed circuit (5) comes to rest with one of its two main surfaces arranged parallel to the enclosure longitudinal axis (11) on the receptacle (2) and is allocated with its other main surface to the movable electrical contact pieces (3,4).

16. Electrical rotary / push switch according to any of Claims 1 to 15, **characterised by** the fact that two guide rails (17) are moulded onto the enclosure or onto the receptacle (1) which are aligned parallel to the enclosure longitudinal axis (11) and which accommodate the two movable contact pieces (3,4) between them in a slidable manner.

17. Electrical rotary / push switch according to any of Claims 1 to 16, **characterised by** the fact that an indexing mechanism is held on the enclosure or on the receptacle (1) which can be resiliently displaced and which engages with each of its two indexing elements (28) in an indexing curve attached to the operating element (2) offset at 180°, respectively.

18. Electrical rotary / push switch according to any of Claims 1 to 17, **characterised by** the fact that the operating element (2) accommodates all the functional components in its interior space and is designed as a grip end sheathing the same.

19. Electrical rotary / push switch according to any of Claims 1 to 18, **characterised by** the fact that the operating element (2) is divided into two crosswise to the enclosure longitudinal axis (11) at approximately the level of the further control track (31) and that the two halves (2a,2b) of the operating element (2) are permanently linked to each other by means of locking hooks (8) and catch lugs (9).

20. Electrical rotary / push switch according to any of Claims 1 to 19, **characterised by** the fact that a helical compression spring (35) generating the spring force necessary for restoring the operating element (2) is arranged between the inside surface (34) of the operating element (2) running crosswise to the enclosure longitudinal axis (11) and the supporting surface (33) of the functional element (10) facing the same.

## Revendications

1. Commutateur rotatif / coulissant avec un boîtier accueillant les pièces de contact électriques (3, 4) auquel un organe d'actionnement (2), pivotant autour de l'axe longitudinal (11) du boîtier, mobile en translation contre une force élastique, parallèlement audit axe longitudinal du boîtier et pouvant être amené dans plusieurs positions de commutation, est monté, ledit organe d'actionnement (2) étant en relation avec des éléments fonctionnels mécaniques (10) qui sont conçus et associés aux pièces de contact électriques, mobiles (3, 4) de sorte que les mouvement de rotation et de poussée en translation de l'organe d'actionnement (2) aux fins de réglage se trouvent transformés seulement en mouvements de poussée en translation pour les pièces de contact électriques, mobiles (3, 4), **caractérisé en ce que**, sur le boîtier, un élément fonctionnel (11), dont les surfaces principales sont orientées parallèlement à l'axe longitudinal (11) du boîtier, est monté, lequel est en prise, par l'intermédiaire d'une denture (12) orientée parallèlement à l'axe longitudinal (11) du boîtier, avec une contre-denture (13) équipant l'organe d'actionnement (2), de sorte que l'élément fonctionnel (10) est entraîné de force, par couplage direct, lors des mouvements rotatifs de l'élément d'actionnement 2, mais n'est pas influencé par les mouvement de poussée en translation dudit organe d'actionnement (2), et que, dans les surfaces principales de l'élément fonctionnel (10), au moins une voie de commande (14) est prévue, laquelle présente, au moins, un premier secteur de parcours de commande de conception hélicoïdale dans lequel s'engage un bouton de commande (15) qui est en relation avec une première pièce de contact, maintenue mobile au boîtier et pouvant être ainsi déplacée par l'élément fonctionnel (10), et que l'organe d'actionnement (2) est équipé d'au moins une autre voie de commande (3) s'étendant concentriquement autour de l'axe longitudinal (11) du boîtier, dans laquelle un bouton de commande (15) s'engage également, lequel est en relation avec une deuxième pièce de contact (4) qui, déplaçable parallèlement à l'axe longitudinal (11) du boîtier, est maintenue audit boîtier, de sorte que la deuxième pièce de contact (4) est entraînée de force, par couplage directe, lors de mouvements de poussée en translation de l'organe d'actionnement (2) et n'est pas influencée par les mouvements rotatifs de l'organe d'actionnement (2).

2. Commutateur électrique rotatif / coulissant selon la revendication 1, ), **caractérisé en ce que** l'élément fonctionnel (10) est conçu en forme de pot et que la denture (12) est formée à la surface principale orientée vers l'organe d'actionnement (2).

3. Commutateur électrique rotatif / coulissant selon la revendication 1 ou 2, ), **caractérisé en ce que** la voie de commande (14) est formée à la manière d'une rainure dans la surface principale de l'élément fonctionnel (10) détournée de l'organe d'actionnement (2).

4. Commutateur électrique rotatif / coulissant selon la revendication 1 ou 2, ), **caractérisé en ce que** la voie de commande (14), en forme de rainure traversant la paroi de la surface principale, est prévue dans l'élément fonctionnel (10).

5. Commutateur électrique rotatif / coulissant selon l'une des revendications 1 à 4, **caractérisé en ce que** la voie de commande (14) présente au moins un premier secteur de parcours de commande de forme hélicoïdale et au moins un deuxième secteur de parcours de commande orienté parallèlement à l'axe longitudinal (11) du boîtier.

6. Commutateur électrique rotatif / coulissant selon l'une des revendications 1 à 5, **caractérisé en ce que** l'autre voie de commande (31) est constituée par deux épaulements formés à partir de la paroi intérieure de l'organe d'actionnement (2) et disposés parallèlement à distance l'un de l'autre et concentriquement par rapport à l'axe longitudinal (11) du boîtier.

7. Commutateur électrique rotatif / coulissant selon l'une des revendications 1 à 5, **caractérisé en ce que,** sur la paroi intérieure de l'organe d'actionnement (2) un grand nombre de pattes (32), parallèles à l'axe longitudinal du boîtier et disposées à intervalles étroits les uns des autres, sont formées, lesquelles constituent, par une interruption en forme de rainure à même hauteur, les autres lignes pilotes (31) orientées concentriquement par rapport à l'axe longitudinal (11) du boîtier.

8. Commutateur électrique rotatif / coulissant selon l'une des revendications 1 à 7, ), **caractérisé en ce que** l'une des pièces de contact électriques mobiles (3, 4), au moins, consiste en un support conçu en tant que patin à glissière et qu'au moins un élément de contact (18), présentant au moins un bras de contact, est maintenu stationnaire audit patin à glissière.

9. Commutateur électrique rotatif / coulissant selon la revendication 8, ), **caractérisé en ce que** le support est pourvu d'un bouton de commande (15) formé d'une pièce et que l'élément de contact (18) est fixé à la surface principale du support située à l'opposé dudit bouton de commande (15).

10. Commutateur électrique rotatif / coulissant selon la revendication 8 ou 9, ), **caractérisé en ce que,** dans chacune des deux surfaces latérales du support resp. du patin à glissière, une rainure de guidage (16) continue est formée parallèlement à l'axe longitudinal 11 du boîtier.

11. Commutateur électrique rotatif / coulissant selon l'une des revendications 8 à 10, ), **caractérisé en ce que** l'élément de contact (18) présente au moins deux bras de contact formés d'une pièce et chaque bras plusieurs doigts de contact formés d'une pièce.

12. Commutateur électrique rotatif / coulissant selon l'une des revendications 1 à 11, ), **caractérisé en ce que** le commutateur électrique rotatif / coulissant est conçu en tant que composant fonctionnel d'une unité de commande présentant d'autres composants de commutation électriques.

13. Commutateur électrique rotatif / coulissant selon la revendication 12, ), **caractérisé en ce que** l'unité de commande est conçue en tant que commutateur de colonne de direction d'un véhicule automobile, que le commutateur rotatif / coulissant est disposé dans le secteur d'extrémité libre du levier d'actionnement dudit commutateur de colonne de direction.

14. Commutateur électrique rotatif / coulissant selon l'une des revendications 1 à 13, **caractérisé en ce que** les pièces de contact électriques maintenues fixement dans le boîtier sont groupées en une seule plaquette de circuits.

15. Commutateur électrique rotatif / coulissant selon l'une des revendications 1 à 14 **caractérisé en ce qu**'un réceptacle (1), associé fonctionnellement au boîtier, est fixé audit boîtier et accueille l'organe d'actionnement (2) mobile en rotation et en translation, et est pourvu d'éléments d'arrêt pour la réception stationnaire de la plaquette de circuits (5) resp. des pièces de contact fixes de sorte que ladite platine de circuits (5) porte contre le réceptacle (1) avec l'une de ses deux surfaces principales disposées parallèlement à l'axe longitudinal (11) du boîtier et est coordonnée avec son autre surface principale aux éléments de contact électriques mobiles (3, 4).

16. Commutateur électrique rotatif / coulissant selon l'une des revendications 1 à 15, **caractérisé en ce que** deux rails de guidage (17) sont formées au boîtier resp. au réceptacle (1), lesquels sont orientés parallèlement à l'axe longitudinal (11) dudit boîtier et accueillent entre eux les deux éléments de contact mobiles (3, 4).

17. Commutateur électrique rotatif / coulissant selon l'une des revendications 1 à 16, **caractérisé en ce qu**'un dispositif d'arrêt, soumis à l'influence d'un ressort, est maintenu au boîtier resp. au réceptacle (1), chacun des deux éléments d'arrêt (28) dudit dispositif d'arrêt s'enclenchant dans une encoche de la bague à cames qui, décalée de 180°, équipe l'organe d'actionnement (2).

18. Commutateur électrique rotatif / coulissant selon l'une des revendications 1 à 17, , **caractérisé en ce que** l'organe d'actionnement (2) accueille dans son espace intérieur tous les composants fonctionnels et est conçu en tant que pièce de préhension engainant ceux-ci.

19. Commutateur électrique rotatif / coulissant selon l'une des revendications 1 à 18, , **caractérisé en ce que** l'organe d'actionnement (2) est divisé en deux parties, transversalement par rapport à l'axe longitudinal (11) du boîtier, à peu près à la hauteur de l'autre voie de commande (31) et que les deux moitiés (2a, 2b) de l'organe d'actionnement (2) sont reliées ensemble par l'intermédiaire de crochets d'arrêt (8) et de brides d'arrêt (9).

20. Commutateur électrique rotatif / coulissant selon l'une des revendications 1 à 19, , **caractérisé en ce qu**'entre la surface intérieure (34) de l'organe d'actionnement (2) perpendiculaire à l'axe longitudinal (11) du boîtier et la surface d'appui (33) de l'élément fonctionnel (10) dirigée vers celle-ci, un ressort cylindrique de compression (35) est disposé, lequel génère la force élastique nécessaire au rappel de l'organe d'actionnement (2).
